# NEUE EUROPÄISCHE PATENTSCHRIFT

(11) **EP 3 256 828 B2**
(45) Veröffentlichungstag und Bekanntmachung des Hinweises auf die Entscheidung über den Einspruch: **30.11.2022**
(45) Hinweis auf die Patenterteilung: 24.07.2019
(21) Anmeldenummer: 16706796.6
(22) Anmeldetag: 27.01.2016
(51) Int. Cl.: G01L 1/12, G01L 3/10

(54) **ANORDNUNG ZUR MESSUNG EINER KRAFT ODER EINES MOMENTES MIT MINDESTENS DREI MAGNETFELDSENSOREN**
APPARATUS FOR THE MEASUREMENT OF A FORCE OR A TORQUE USING AT LEAST THREE MAGNETIC FIELD SENSORS
DISPOSITIF POUR MESURER UNE FORCE OU UN COUPLE AVEC DE MOINS TROIS SONDES DE CHAMP MAGNÉTIQUES

(30) Priorität: 09.02.2015 DE 102015202240
(43) Veröffentlichungstag der Anmeldung: 20.12.2017
(73) Patentinhaber: Schaeffler Technologies AG & Co. KG, 91074 Herzogenaurach (DE)
(72) Erfinder: NEUSCHAEFER-RUBE, Stephan, 91074 Herzogenaurach (DE); HEIM, Jens, 97493 Bergrheinfeld (DE)
(86) Internationale Anmeldenummer: PCT/DE2016/200049
(87) Internationale Veröffentlichungsnummer: WO 2016/127988

(56) Entgegenhaltungen:
- WO-A2-01/96826
- DE-A1-102010 033 308
- US-A1- 2011 067 947

## Beschreibung

Die vorliegende Erfindung betrifft eine Anordnung zum Messen einer Kraft und/oder eines Momentes an einem sich in einer Achse erstreckenden Maschinenelement mit mindestens drei Magnetfeldsensoren unter Nutzung des invers-magnetostriktiven Effektes.

Aus der US 2012/0296577 A1 ist ein magnetoelastischer Kraftsensor bekannt, der zur Messung von Kräften an einem Element ausgebildet ist, welches umfänglich magnetisiert ist.

Die US 5,321,985 lehrt einen magnetostriktiven Drehmomentsensor, bei welchem eine magnetostriktive Schicht auf die äußere Oberfläche einer Welle aufgebracht ist und gegenüber von Anregungs- und Detektionsspulen positioniert ist. Ein auf die Welle wirkendes Drehmoment verursacht eine Materialspannung in der magnetostriktiven Schicht, wodurch sich deren relative magnetische Permeabilität richtungsabhängig ändert. Das aus der magnetostriktiven Schicht austretende magnetische Feld ist mit den Detektionsspulen messbar.

Die DE 699 36 138 T2 zeigt einen magnetischen Kraftsensor, bei welchem ein magnetisiertes Material einem Biegemoment ausgesetzt ist, wobei mithilfe einer Sensoranordnung das äußere Magnetfeld des magnetisierten Materials bestimmbar ist.

Aus der DE 603 09 678 T2 ist ein Verfahren zum Erfassen eines Drehmomentes in einer Welle bekannt. bei welchem Magnetfelder mit alternierender Polarität erzeugt werden, welche mit einer Sensoranordnung gemessen werden.

Die US 200710022809 A1 zeigt eine Vorrichtung zur Messung von Drehmomenten, bei welcher eine Schicht aus einem magnetostriktiven Material in einer Welle ausgebildet ist.

Aus der US 5,052,232 ist ein magnetoelastischer Drehmomentsensor bekannt, bei welchem ein Maschinenelement mit zwei umlaufenden magnetostriktiven Beschichtungen versehen ist.

Aus der DE 698 38 904 T2 ist ein Drehmomentsensor mit kreisförmiger Magnetisierung bekannt. Die Magnetisierung ist in einem ferromagnetischen, magnetostriktiven Material einer Welle ausgebildet und erstreckt sich kreisförmig um die Welle.

Aus der DE 692 22 588 T2 ist ein ringförmig magnetisierter Drehmomentsensor bekannt.

Die WO 20071048143 A2 lehrt einen Sensor mit einem magnetisierten Schaft.

Die WO 01/27638 A1 zeigt einen Beschleunigungssensor mit einem Schaft, der umfänglich oder longitudinal magnetisiert ist.

Aus der WO 2006/053244 A2 ist ein Drehmomentsensor bekannt, der eine Magnetisierung an einem rotierenden Schaft umfasst. Die Magnetisierung ist umfänglich ausgebildet.

Die US 8,191,431 B2 zeigt eine Sensoranordnung mit einem magnetisierten Schaft.

Die EP 2 365 927 B1 zeigt ein Tretlager mit zwei Tretkurbeln und mit einem Kettenblattträger, der mit einer Welle des Tretlagers verbunden ist. Der Kettenblattträger ist drehfest mit einer Kettenblattwelle verbunden, die wiederum drehfest mit der Welle verbunden ist. Die Kettenblattwelle weist abschnittsweise eine Magnetisierung auf. Es ist ein Sensor vorgesehen, der eine Änderung der Magnetisierung bei einem im Bereich der Magnetisierung vorliegenden Drehmoment erfasst.

Die US 6,490,934 B2 lehrt einen magnetoelastischen Drehmomentsensor zur Messung eines Drehmomentes, welches auf ein Element mit einem ferromagnetischen, magnetostriktiven und magnetoelastisch aktiven Bereich wirkt. Dieser Bereich ist in einem Messwandier ausgebildet, der als zylindrische Hülse beispielsweise auf einer Welle sitzt. Der Drehmomentsensor steht dem Messwandler gegenüber.

Aus der EP 0 803 053 B1 ist ein Drehmomentsensor bekannt, der einen magnetoelastischen Messwandler umfasst. Der Messwandler sitzt als zylindrische Hülse auf einer Welle.

Die US 8,893,562 B2 lehrt ein Verfahren zum Erkennen eines magnetischen Störfeldes bei einer Drehmomentmessung an einer magnetoelastischen Welle. Es werden zwei Signale gemessen, wobei das zweite Signal dem magnetischen Störfeld entspricht und vom ersten Signal subtrahiert wird.

Die US 8,001,849 B2 zeigt eine Anordnung zur magnetoelastischen Drehmomentmessung, bei welcher die Wirkung von äußeren Magnetfeldern kompensiert sein soll. Die Anordnung umfasst einen magnetisierten Bereich einer Welle sowie mindestens einen passiven und einen aktiven Magnetfeldsensor. Die passiven Magnetfeldsensoren können beiderseits des magnetisierten Bereiches angeordnet sein.

Die US 2011/0162464 A1 zeigt eine Anordnung zur magnetoelastischen Drehmomentmessung. bei welcher die Wirkung von gleichförmigen und ungleichförmigen Magnetfeldern kompensiert sein soll. Die Anordnung umfasst einen magnetisierten Bereich einer Weile sowie mindestens drei Magnetfeldsensoren. Der zweite und der dritte Magnetfeldsensor können neben dem magnetisierten Bereich angeordnet sein.

Die US 8,087,304 B2 zeigt einen magnetoelastischen Drehmomentsensor zum Messen eines auf eine Welle wirkenden Drehmomentes. Die Welle weist eine oder mehrere umfängliche Magnetisierungen auf. Fig. 12 der US 8,087,304 B2 zeigt eine Ausführungsform mit nur einer umfänglichen Magnetisierung, wobei zwei primäre Magnetfeldsensoren im Bereich der Magnetisierung und zwei sekundäre Magnetfeldsensoren neben dem Bereich der Magnetisierung angeordnet sind. Fig. 18 der US 8,087,304 B2 zeigt eine Ausführungsform mit zwei umfänglichen Magnetisierungen, die abwechseind polarisiert sind, wobei auch mehrere Magnetfeldsensoren an einem axialen Übergang zwischen den beiden Magnetisierungen angeordnet sind. Fig. 8 der US 8,087,304 B2 zeigt eine Ausführungsform mit drei umfänglichen Magnetisierungen, die abwechselnd polarisiert sind, wobei jeweils ein Magnetfeldsensor in einem der Bereiche der drei Magnetisierungen angeordnet ist. Durch die besondere Anordnung der Magnetfeldsensoren soll der Einfluss von magnetischen Störfeldern aufgehoben WO 01/96826 A2 offenbart auch eine Anordnung zum Messen eines Momentes.

Die Aufgabe der vorliegenden Erfindung besteht ausgehend vom Stand der Technik darin, die Möglichkeiten zur Reduktion von magnetischen Störfeldern bei einer auf dem invers-magnetostriktiven Effekt beruhenden Messung von Kräften und/oder Momenten zu erweitern.

Die genannte Aufgabe wird gelöst durch eine Anordnung gemäß dem beigefügten Anspruch 1.

Die erfindungsgemäße Anordnung dient zum Messen einer Kraft und/oder eines Momentes an einem sich in einer Achse erstreckenden Maschinenelement. Die Kraft bzw, das Moment wirkt auf das Maschinenelement, wodurch es zu mechanischen Spannungen kommt und sich das Maschinenelement zumeist geringfügig verformt. Die Achse bildet bevorzugt eine Rotationsachse des Maschinenelementes.

Das Maschinenelement weist mindestens zwei sich umfänglich um die Achse herum erstreckende Magnetisierungsbereiche für eine im Maschinenelement ausgebildete Magnetisierung auf. Es handelt sich somit um mindestens zwei die Achse umlaufende Magnetisierungsbereiche, d. h. zirkulare Magnetisierungsbereiche, wobei die Achse selbst bevorzugt nicht einen Teil der Magnetisierungsbereiche bildet. Die Magnetisierungsbereiche weisen eine tangentiale Ausrichtung in Bezug auf eine sich um die Achse herum erstreckende Oberfläche des Maschinenelementes auf. Die Magnetisierungsbereiche weisen bevorzugt ausschließlich eine tangentiale Ausrichtung in Bezug auf eine sich um die Achse herum erstreckende Oberfläche des Maschinenelementes auf. Die Magnetisierungsbereiche erstrecken sich bevorzugt entlang eines geschlossenen Pfades um die Achse herum, wobei die Magnetisierungsbereiche kurze Lücken aufweisen dürfen. Die Magnetisierungsbereiche bilden jeweils einen Primärsensor zur Bestimmung der Kraft bzw. des Momentes. Die Magnetisierungsbereiche weisen bevorzugt eine gleiche räumliche Ausdehnung auf. Die Magnetisierungsbereiche sind bevorzugt jeweils in einem axialen Abschnitt des Maschinenelementes ausgebildet.

Das Maschinenelement weist weiterhin magnetisch neutrale Bereiche auf, die jeweils axial zwischen den Magnetisierungsbereichen und/oder axial neben den Magnetisierungsbereichen des Maschinenelementes angeordnet sind. Das Maschinenelement besitzt mindestens einen der magnetisch neutralen Bereiche. Die magnetisch neutralen Bereiche weisen weder eine Permanentmagnetisierung auf, noch ist die Anordnung dazu ausgebildet, die magnetisch neutralen Bereiche temporär zu magnetisieren. Selbstverständlich können ungewollte magnetische Störfelder zu einer temporären Magnetisierung der magnetisch neutralen Bereiche führen. Die magnetisch neutralen Bereiche sind bevorzugt nicht magnetisiert. Die magnetisch neutralen Bereiche sind bevorzugt jeweils in einem axialen Abschnitt des Maschinenelementes ausgebildet.

Die Anordnung umfasst weiterhin mindestens einen ersten Magnetfeldsensor, einen zweiten Magnetfeldsensor und einen dritten Magnetfeldsensor, welche jeweils einen Sekundärsensor zur Bestimmung der Kraft bzw. des Momentes bilden. Die Primärsensoren, d, h, die Magnetisierungsbereiche dienen zur Wandlung der zu messenden Kraft bzw. des zu messenden Momentes in ein entsprechendes Magnetfeld, während die Sekundärsensoren die Wandlung dieses Magnetfeldes in elektrische Signale ermöglichen. Der erste Magnetfeldsensor, der zweite Magnetfeldsensor und der dritte Magnetfeldsensor sind jeweils zur einzelnen Messung einer Richtungskomponente eines durch die Magnetisierung sowie durch die Kraft und/oder durch das Moment bewirkten Magnetfeldes ausgebildet. Das genannte Magnetfeld tritt aufgrund des invers-magnetostriktiven Effektes auf. Somit beruht die mit der erfindungsgemäßen Anordnung mögliche Messung auf dem invers-magnetostriktiven Effekt.

Die Magnetfeldsensoren sind gegenüber dem Maschinenelement angeordnet, wobei bevorzugt nur ein geringer radialer Abstand zwischen den Magnetfeldsensoren und einer inneren oder äußeren Oberfläche des Maschinenelementes vorhanden ist. Der erste Magnetfeldsensor, der zweite Magnetfeldsensor und der dritte Magnetfeldsensor befinden sich an drei unterschiedlichen axialen Positionen. An den axialen Positionen des ersten Magnetfeldsensors, des zweiten Magnetfeldsensors und des dritten Magnetfeldsensors befindet sich jeweils einer der Magnetisierungsbereiche oder einer der magnetisch neutralen Bereiche, d. h. dass das Maschinenelement grundsätzlich an diesen axialen Positionen ausgebildet ist,

Erfindungsgemäß befindet sich der dritte Magnetfeldsensor an einer axialen Position eines der magnetisch neutralen Bereiche. Somit ist der dritte Magnetfeldsensor nicht radial benachbart zu einem der Magnetisierungsbereiche, sondern radial benachbart zu einem der magnetisch neutralen Bereiche angeordnet. Dieser magnetisch neutrale Bereich ist axial zwischen zweien der Magnetisierungsbereiche angeordnet.

Ein besonderer Vorteil der erfindungsgemäßen Anordnung besteht darin, dass sie in unterschiedlichen Ausführungen eine sichere Reduktion von magnetischen Störfeldem erlaubt.

Die mindestens zwei Magnetisierungsbereiche können permanent oder temporär magnetisiert sein. Bei bevorzugten Ausführungsformen der erfindungsgemäßen Anordnung sind die Magnetisierungsbereiche permanent magnetisiert, sodass die Magnetisierung durch eine Permanentmagnetisierung gebildet ist. Bei alternativ bevorzugten Ausführungsformen der erfindungsgemäßen Anordnung weist diese weiterhin mindestens einen Magneten zum Magnetisieren der Magnetisierungsbereiche auf, sodass die Magnetisierung der Magnetisierungsbereiche grundsätzlich temporär ist. Der mindestens eine Magnet kann durch einen Permanentmagneten oder bevorzugt durch einen Elektromagneten gebildet sein.

Die permanent bzw. temporär magnetisierten Magnetisierungsbereiche sind in einem von einer Kraft bzw. von einem Moment unbelasteten Zustand des Maschinenelementes nach außerhalb der Magnetisierungsbereiche bevorzugt magnetisch neutral, sodass kein technisch relevantes Magnetfeld außerhalb der Magnetisierungsbereiche messbar ist.

Die Magnetisierungsbereiche stellen jeweils einen Teil des Volumens des Maschinenelementes dar. Die Magnetisierungsbereiche sind bevorzugt jeweils ringförmig ausgebildet, wobei die Achse des Maschinenelementes auch eine mittlere Achse der jeweiligen Ringform bildet. Besonders bevorzugt weisen die Magnetisierungsbereiche jeweils die Form eines zur Achse des Maschinenelementes koaxialen Hohlzylinders auf.

Die mit den Magnetfeldsensoren messbare Richtungskomponente ist eine axiale Richtung.

Grundsätzlich umfasst die erfindungsgemäße Anordnung mehr als drei der Magnetfeldsensoren: besonders bevorzugt vier oder acht der Magnetfeldsensoren. Die mindestens vier Magnetfeldsensoren weisen bevorzugt einen gleichen Abstand zur Achse des Maschinenelementes auf. Grundsätzlich können die mindestens vier Magnetfeldsensoren außerhalb des Maschinenelementes oder auch innerhalb eines Hohlraumes des Maschinenelementes angeordnet sein, beispielsweise wenn das Maschinenelement durch eine Hohlwelle gebildet ist.

Die Magnetisierungsbereiche weisen bevorzugt jeweils eine hohe Magnetostriktivität auf.

Die Magnetisierungsbereiche sind bevorzugt axial beabstandet zueinander angeordnet, wobei zwischen zwei benachbarten der Magnetisierungsbereiche jeweils einer der magnetisch neutralen Bereiche angeordnet ist. Insofern mehr als zwei der Magnetisierungsbereiche vorhanden sind, weisen diese bevorzugt jeweils einen gleichen Abstand zueinander auf.

Das Maschinenelement weist bevorzugt die Form eines Prismas oder eines Zylinders auf, wobei das Prisma bzw. der Zylinder koaxial zu der Achse angeordnet ist. Das Prisma bzw. der Zylinder ist bevorzugt gerade. Besonders bevorzugt weist das Maschinenelement die Form eines geraden Kreiszylinders auf, wobei der Kreiszylinder koaxial zu der Achse angeordnet ist. Bei besonderen Ausführungsformen ist das Prisma bzw. der Zylinder konisch ausgebildet. Das Prisma bzw. der Zylinder kann auch hohl sein.

Das Maschinenelement ist bevorzugt durch eine Welle, durch eine Hohlwelle, durch eine Schaltgabel oder durch einen Flansch gebildet. Die Welle, die Schaltgabel bzw. der Flansch können für Belastungen durch unterschiedliche Kräfte und Momente ausgelegt sein und beispielsweise eine Komponente eines Sensortretlagers, eines Wankstabilisators oder eines Düngerstreuers sein. Grundsätzlich kann das Maschinenelement auch durch völlig andersartige Maschinenelementtypen gebildet sein.

Die mindestens vier Magnetfeldsensoren sind bevorzugt jeweils durch einen Halbleitersensor gebildet. Die mindestens drei Magnetfeldsensoren sind alternativ bevorzugt durch Hall-Sensoren, Spulen, Förstersonden oder Fluxgate-Magnetometer gebildet. Grundsätzlich können auch andere Sensortypen verwendet werden, insofern sie zur Messung einer einzelnen Richtungskomponente des durch den invers-magnetostriktiven Effekt hervorgerufenen magnetischen Feldes geeignet sind.

Bei einer ersten Gruppe bevorzugter Ausführungsformen der erfindungsgemäßen Anordnung ist die durch die Magnetfeldsensoren messbare Richtungskomponente des durch die Magnetisierung sowie durch die Kraft und/oder durch das Moment bewirkten Magnetfeldes durch eine axiale Richtungskomponente gebildet. Die Magnetfeldsensoren ermöglichen somit die ausschließliche Messung der axialen Richtungskomponente des durch die Magnetisierung sowie durch die Kraft und/oder durch das Moment bewirkten Magnetfeldes. Der erste Magnetfeldsensor befindet sich bei dieser ersten Gruppe bevorzugter Ausführungsformen an einer axialen Position des ersten Magnetisierungsbereiches, während sich der zweite Magnetfeldsensor an einer axialen Position des zweiten Magnetisierungsbereiches befindet. Somit befindet sich der erste Magnetfeldsensor an einer axialen Position, in welcher der erste Magnetisterungsbereich ausgebildet ist, während sich der zweite Magnetfeldsensor an einer axialen Position befindet, in welcher der zweite Magnetisierungsbereich ausgebildet ist. Folglich ist der erste Magnetfeldsensor radial benachbart zum ersten Magnetisierungsbereich angeordnet, während der zweite Magnetfeldsensor radial benachbart zum zweiten Magnetisierungsbereich angeordnet ist.

Bei der erfindungsgemäßen Anordnung umfasst diese einen vierten Magnetfeldsensor zur einzelnen Messung einer axialen Richtungskomponente des durch die Magnetisierung sowie durch die Kraft und/oder durch das Moment bewirkten Magnetfeldes. Der vierte Magnetfeldsensor ist bevorzugt an der gleichen axialen Position wie der erste Magnetfeldsensor, an der gleichen axialen Position wie der zweite Magnetfeldsensor oder an der gleichen axialen Position wie der dritte Magnetfeldsensor angeordnet.

Bei der erfindungsgemäßen Anordnung weisen der erste sich umfänglich um die Achse herum erstreckende Magnetisierungsbereich und der zweite sich umfänglich um die Achse herum erstreckende Magnetisierungsbereich bevorzugt eine gleiche Polarität auf, d. h. sie besitzen einen gleichen Umlaufsinn. Derjenige magnetisch neutrale Bereich, an dessen axialer Position sich der dritte Magnetfeldsensor befindet, ist axial zwischen dem ersten Magnetisierungsbereich und dem zweiten Magnetisierungsbereich angeordnet. Somit ist auch der dritte Magnetfeldsensor axial zwischen den beiden Magnetisierungsbereichen angeordnet.

Bei der erfindungsgemäßen Anordnung umfasst diese einen vierten Magnetfeldsensor zur einzelnen Messung einer axialen Richtungskomponente des durch die Magnetisierung sowie durch die Kraft und/oder durch das Moment bewirkten Magnetfeldes. Der vierte Magnetfeldsensor ist an der gleichen axialen Position wie der dritte Magnetfeldsensor angeordnet. Er ist bezogen auf die Achse dem dritten Magnetfeldsensor gegenüberliegend angeordnet. Folglich weisen der dritte Magnetfeldsensor und der vierte Magnetfeldsensor einen Mittelpunktswinkel von 180° zueinander bezogen auf die Achse auf. Dabei weisen der erste Magnetisierungsbereich und der zweite Magnetisierungsbereich eine gleiche Polarität auf, d. h. sie besitzen einen gleichen Umlaufsinn. Derjenige magnetisch neutrale Bereich, an dessen axialer Position sich der dritte Magnetfeldsensor befindet, ist axial zwischen den beiden Magnetisierungsbereichen angeordnet. Somit ist auch der dritte Magnetfeldsensor axial zwischen den beiden Magnetisierungsbereichen angeordnet.

Bei dieser ersten Ausführungsform ist der erste Magnetfeldsensor bezogen auf die Achse dem zweiten Magnetfeldsensor bevorzugt gegenüberliegend angeordnet. Folglich weisen der erste Magnetfeldsensor und der zweite Magnetfeldsensor einen Mittelpunktswinkel von 180° zueinander bezogen auf die Achse auf.

Dabei weisen der erste Magnetfeldsensor und der dritte Magnetfeldsensor bevorzugt eine gleiche tangentiale Position auf, sodass sie bevorzugt gemeinsam auf einer zur Achse parallelen Gerade liegen. Der zweite Magnetfeldsensor und der vierte Magnetfeldsensor weisen bevorzugt eine gleiche tangentiale Position auf, sodass sie bevorzugt gemeinsam auf einer zur Achse parallelen Gerade liegen.

Dabei sind die Magnetfeldsensoren bevorzugt derart angeordnet und verschaltet, dass eine Differenz aus der Summe der mit dem ersten Magnetfeldsensor und mit dem zweiten Magnetfeldsensor messbaren axialen Richtungskomponenten und der Summe der mit dem dritten Magnetfeldsensor und mit dem vierten Magnetfeldsensor messbaren axialen Richtungskomponenten bestimmbar ist. Bei den genannten axialen Richtungskomponenten handelt es sich um die axialen Richtungskomponenten des durch die Magnetisierung sowie durch die Kraft und/oder durch das Moment bewirkten Magnetfeldes, denen ein magnetisches Störfeld überlagert sein kann. Die genannte Summen- und Differenzbildung kann beispielsweise dadurch realisiert sein, dass die einen Subtrahenden bildenden Magnetfeldsensoren entgegengesetzt zu den einen Minuenden bildenden Magnetfeldsensoren ausgerichtet sind. Die genannte Summen- und Differenzbildung kann aber auch dadurch realisiert sein, dass die Magnetfeldsensoren gleich ausgerichtet sind und aus deren Signalen eine Summe gebildet wird, wobei die einen Subtrahenden bildenden Magnetfeldsensoren umgekehrt gepolt sind.

Bei einer bevorzugten Ausführungsformen der erfindungsgemäßen Anordnung umfasst diese weiterhin einen fünften Magnetfeldsensor, einen sechsten Magnetfeldsensor, einen siebenten Magnetfeldsensor und einen achten Magnetfeldsensor, die jeweils zur einzelnen Messung einer axialen Richtungskomponente des durch die Magnetisierung sowie durch die Kraft und/oder durch das Moment bewirkten Magnetfeldes ausgebildet sind. Bei dieser zweiten Ausführungsform weisen der erste Magnetisierungsbereich und der zweite Magnetisierungsbereich eine gleiche Polarität auf, d.h. sie besitzen einen gleichen Umlaufsinn. Derjenige magnetisch neutrale Bereich, an dessen axialer Position sich der dritte Magnetfeldsensor befindet, ist axial zwischen den beiden Magnetisierungsbereichen angeordnet Somit ist auch der dritte Magnetfeldsensor axial zwischen den beiden Magnetisierungsbereichen angeordnet.

Bei dieser Ausführungsform ist der vierte Magnetfeldsensor bevorzugt an einer gleichen axialen Position wie der dritte Magnetfeldsensor angeordnet. Er ist bezogen auf die Achse dem dritten Magnetfeldsensor gegenüberliegend angeordnet. Folglich weisen der dritte Magnetfeldsensor und der vierte Magnetfeldsensor einen Mittelpunktswinkel von 180° zueinander bezogen auf die Achse auf.

Bei dieser Ausführungsform ist der fünfte Magnetfeldsensor bevorzugt an einer gleichen axialen Position wie der erste Magnetfeldsensor angeordnet. Er ist bezogen auf die Achse dem ersten Magnetfeldsensor gegenüberliegend angeordnet. Folglich weisen der fünfte Magnetfeldsensor und der erste Magnetfeldsensor einen Mittelpunktswinkel von 180° zueinander bezogen auf die Achse auf.

Bei dieser Ausführungsform ist der sechste Magnetfeldsensor bevorzugt an einer gleichen axialen Position wie der zweite Magnetfeldsensor angeordnet. Er ist bezogen auf die Achse dem zweiten Magnetfeldsensor gegenüberliegend angeordnet. Folglich weisen der sechste Magnetfeldsensor und der zweite Magnetfeldsensor einen Mittelpunktswinkel von 180° zueinander bezogen auf die Achse auf.

Bei dieser Ausführungsform ist der siebente Magnetfeldsensor an einer gleichen axialen Position wie der dritte Magnetfeldsensor angeordnet. Zumindest ist der siebente Magnetfeldsensor an einer axialen Position desjenigen der magnetisch neutralen Bereiche angeordnet, an dessen axialer Position auch der dritte Magnetfeldsensor angeordnet ist. Der siebente Magnetfeldsensor ist bevorzugt benachbart zum dritten Magnetfeldsensor angeordnet, sodass sich auch seine tangentiale bzw. radiale Position kaum von der des dritten Magnetfeldsensors unterscheidet.

Bei dieser Ausführungsform ist der achte Magnetfeldsensor bevorzugt an einer gleichen axialen Position wie der siebente Magnetfeldsensor angeordnet. Er ist bezogen auf die Achse dem siebenten Magnetfeldsensor gegenüberliegend angeordnet. Folglich weisen der achte Magnetfeldsensor und der siebente Magnetfeldsensor einen Mittelpunktswinkel von 180° zueinander bezogen auf die Achse auf.

Der erste Magnetfeldsensor, der zweite Magnetfeldsensor und der dritte Magnetfeldsensor weisen bei dieser Ausführungsform bevorzugt eine gleiche tangentiale Position auf, sodass sie bevorzugt gemeinsam auf einer zur Achse parallelen Gerade liegen. Der siebente Magnetfeldsensor ist bevorzugt unmittelbar benachbart zum dritten Magnetfeldsensor angeordnet, sodass der siebente Magnetfeldsensor zumindest nahezu die gleiche tangentiale Position wie der dritte Magnetfeldsensor aufweist. Der siebente Magnetfeldsensor und der dritte Magnetfeldsensor können beispielsweise auf den beiden Seiten einer Platine angeordnet sein.

Der vierte Magnetfeldsensor, der fünfte Magnetfeldsensor und der sechste Magnetfeldsensor weisen bei dieser Ausführungsform bevorzugt eine gleiche tangentiale Position auf, sodass sie bevorzugt gemeinsam auf einer zur Achse parallelen Gerade liegen. Der achte Magnetfeldsensor ist bevorzugt unmittelbar benachbart zum vierten Magnetfeldsensor angeordnet, sodass der achte Magnetfeldsensor zumindest nahezu die gleiche tangentiale Position wie der vierte Magnetfeldsensor aufweist. Der achte Magnetfeldsensor und der vierte Magnetfeldsensor können beispielsweise auf den beiden Seiten einer Platine angeordnet sein.

Bei dieser Ausführungsform sind die Magnetfeldsensoren bevorzugt derart angeordnet und verschaltet, dass eine Differenz aus der Summe der mit dem ersten Magnetfeldsensor, mit dem zweiten Magnetfeldsensor. mit dem fünften Magnetfeldsensor und mit dem sechsten Magnetfeldsensor messbaren axialen Richtungskomponenten und der Summe der mit dem dritten Magnetfeldsensor, mit dem vierten Magnetfeldsensor, mit dem siebenten Magnetfeldsensor und mit dem achten Magnetfeldsensor messbaren axialen Richtungskomponenten bestimmbar ist. Bei den genannten axialen Richtungskomponenten handelt es sich um die axialen Richtungskomponenten des durch die Magnetisierung sowie durch die Kraft und/oder durch das Moment bewirkten Magnetfeldes, denen ein magnetisches Störfeld überlagert sein kann. Die genannte Summen- und Differenzbildung kann beispielsweise dadurch realisiert sein, dass die einen Subtrahenden bildenden Magnetfeldsensoren entgegengesetzt zu den einen Minuenden bildenden Magnetfeldsensoren ausgerichtet sind. Die genannte Summen- und Differenzbildung kann aber auch dadurch realisiert sein, dass die Magnetfeldsensoren gleich ausgerichtet sind und aus deren Signalen eine Summe gebildet wird, wobei die einen Subtrahenden bildenden Magnetfeldsensoren umgekehrt gepolt sind.

Weitere Einzelheiten, Vorteile und Weiterbildungen der Erfindung ergeben sich aus der nachfolgenden Beschreibung bevorzugter Ausführungsformen der Erfindung, unter Bezugnahme auf die Zeichnung. Es zeigen:
- Fig. 1: eine erste Ausführungsform einer ersten Gruppe bevorzugter Ausführungsformen einer erfindungsgemäßen Anordnung;
- Fig. 2: eine zweite Ausführungsform der ersten Gruppe bevorzugter Ausführungsformen der erfindungsgemäßen Anordnung.

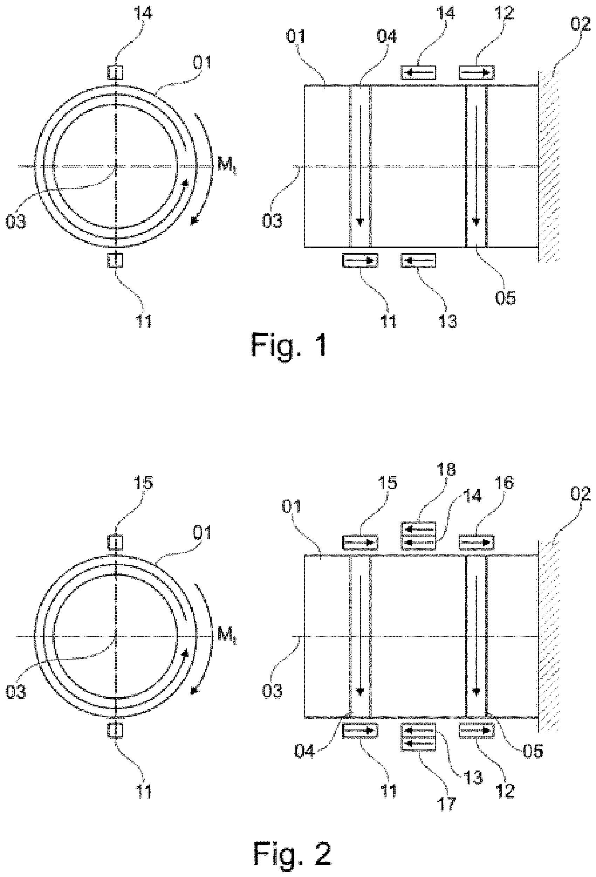

Fig. 1 und Fig. 2 zeigen eine erfindungsgemäße Anordnung jeweils in zwei Ansichten. Die linken Teile der Figuren umfassen jeweils eine Querschnittsansicht, während die rechten Teile der Figuren jeweils eine Aufsicht der jeweiligen Ausführungsform der erfindungsgemaßen Anordnung umfassen.

Fig. 1 zeigt eine erste Ausführungsform einer ersten Gruppe bevorzugter Ausführungsformen der erfindungsgemäßen Anordnung. Die Anordnung umfasst zunächst ein Maschinenelement in Form eines Flansches 01, welcher an einem Grundkörper 02 befestigt ist. Auf den Flansch 01 wirkt eine Kraft oder ein Drehmoment, insbesondere ein Drehmoment Mt. Der Flansch 01 weist die Form eines hohlen Kreiszylinders auf. Der Flansch 01 erstreckt sich in einer Achse 03. welche auch die mittlere Achse der Hohlzylinderform des Flansches 01 bildet. Der Flansch 01 besteht aus einem magnetoelastischen Material, welches den magnetostriktiven Effekt aufweist.

In einem axialen Abschnitt des Flansches 01 ist ein erster Permanentmagnetisierungsbereich 04 ausgebildet. In einem weiteren axialen Abschnitt des Flansches 01 ist ein zweiter Permanentmagnetisierungsbereich 05 ausgebildet. Die Permanentmagnetisierungsbereiche 04, 05 erstrecken sich jeweils umlaufend um die Achse 03 herum, d. h. es handelt sich um zirkulare Permanentmagnetisierungen. Die Polarität der Permanentmagnetisierungen, d. h. deren Umlaufsinn ist in beiden Permanentmagnetisierungsbereichen 04, 05 gleich. Die zwei Permanentmagnetisierungsbereiche 04, 05 liegen in zwei axial beabstandeten Ebenen.

Diese Ausführungsform der erfindungsgemäßen Anordnung umfasst weiterhin einen ersten Magnetfeldsensor 11, einen zweiten Magnetfeldsensor 12, einen dritten Magnetfeldsensor 13 und einen vierten Magnetfeldsensor 14. Die Magnetfeldsensoren 11, 12, 13, 14 sind jeweils zur einzelnen Messung einer axialen Richtungskomponente eines durch die Magnetisierungen der Permanentmagnetisierungsbereiche 04, 05 sowie durch die Kraft und/oder durch das Drehmoment bewirkten Magnetfeldes ausgebildet.

Die vier Magnetfeldsensoren 11, 12, 13, 14 sind in drei axial beabstandeten Ebenen angeordnet. Der erste Magnetfeldsensor 11 liegt in der gleichen Ebene wie der erste Permanentmagnetisierungsbereich 04. Der zweite Magnetfeldsensor 12 liegt in der gleichen Ebene wie der zweite Permanentmagnetisierungsbereich 05. Der dritte Magnetfeldsensor 13 und der vierte Magnetfeldsensor 14 liegen gemeinsam in einer Ebene zwischen den beiden Permanentmagnetisierungsbereichen 04, 05, wo der Flansch 01 nicht magnetisiert ist, d. h. magnetisch neutral ist. Der erste Magnetfeldsensor 11 und der dritte Magnetfeldsensor 13 sind in Bezug auf die Achse 03 gegenüber dem zweiten Magnetfeldsensor 12 und dem vierten Magnetfeldsensor 14 angeordnet Der erste Magnetfeldsensor 11 und der zweite Magnetfeldsensor 12 sind jeweils entgegengesetzt zum dritten Magnetfeldsensor 13 und zum vierten Magnetfeldsensor 14 gepolt.

Fig. 2 zeigt eine zweite Ausführungsform der ersten Gruppe bevorzugter Ausführungsformen der erfindungsgemäßen Anordnung. Diese zweite Ausführungsform unterscheidet sich lediglich in der Anzahl und Anordnung der Magnetfeldsensoren von der in Fig. 1 gezeigten Ausführungsform. Diese zweite Ausführungsform umfasst weiterhin einen fünften Magnetfeldsensor 15, einen sechsten Magnetfeldsensor 16, einen siebenten Magnetfeldsensor 17 und einen achten Magnetfeldsensor 18. Auch diese weiteren Magnetfeldsensoren 15, 16, 17, 18 sind jeweils zur einzelnen Messung einer axialen Richtungskomponente des durch die Magnetisierungen der Permanentmagnetisierungsbereiche 04, 05 sowie durch die Kraft und/oder durch das Drehmoment bewirkten Magnetfeldes ausgebildet.

Die acht Magnetfeldsensoren 11, 12, 13, 14, 15, 16, 17, 18 sind in drei axial beabstandeten Ebenen angeordnet. Der erste Magnetfeldsensor 11 und der fünfte Magnetfeldsensor 15 liegen in der gleichen Ebene wie der erste Permanentmagnetisierungsbereich 04. Der zweite Magnetfeldsensor 12 und der sechste Magnetfeldsensor 16 liegen in der gleichen Ebene wie der zweite Permanentmagnetisierungsbereich 05. Der dritte Magnetfeldsensor 13, der vierte Magnetfeldsensor 14, der siebente Magnetfeldsensor 17 und der achte Magnetfeldsensor 18 liegen gemeinsam in einer Ebene zwischen den beiden Permanentmagnetisierungsbereichen 04, 05, wo der Flansch 01 nicht magnetisiert ist. Der erste Magnetfeldsensor 11, der zweite Magnetfeldsensor 12, der dritte Magnetfeldsensor 13 und der siebente Magnetfeldsensor 17 sind in Bezug auf die Achse 03 gegenüber dem vierten Magnetfeldsensor 14, dem fünften Magnetfeldsensor 15, dem sechsten Magnetfeldsensor 16 und dem achten Magnetfeldsensor 18 angeordnet. Der erste Magnetfeldsensor 11, der zweite Magnetfeldsensor 12, der fünfte Magnetfeldsensor 15 und der sechste Magnetfeldsensor 11 sind jeweils entgegengesetzt zum dritten Magnetfeldsensor 13, zum vierten Magnetfeldsensor 14, zum siebenten Magnetfeldsensor 17 und zum achten Magnetfeldsensor 18 gepolt. Der dritte Magnetfeldsensor 13 und der siebente Magnetfeldsensor 17 befinden sich im Wesentlichen an der gleichen Position; beispielsweise auf einer Vorder- und einer Rückseite einer Platine (nicht gezeigt). Der vierte Magnetfeldsensor 14 und der achte Magnetfeldsensor 18 befinden sich im Wesentlichen an der gleichen Position; beispielsweise auf einer Vorder- und einer Rückseite einer Platine (nicht gezeigt).

### Bezugszeichenliste

- 01: Flansch
- 02: Grundkörper
- 03: Achse
- 04: erster Permanentmagnetisierungsbereich
- 05: zweiter Permanentmagnetisierungsbereich
- 06: dritter Permanentmagnetisierungsbereich
- 07: -
- 08: -
- 09: -
- 11: erster Magnetfeldsensor
- 12: zweiter Magnetfeldsensor
- 13: dritter Magnetfeldsensor
- 14: vierter Magnetfeldsensor
- 15: fünfter Magnetfeldsensor
- 16: sechster Magnetfeldsensor
- 17: siebenter Magnetfeldsensor
- 18: achter Magnetfeldsensor

## Patentansprüche

1. Anordnung zum Messen einer Kraft und/oder eines Momentes (Mt) an einem sich in einer Achse (03) erstreckenden Maschinenelement (01); wobei das Maschinenelement (01) mindestens zwei sich umfänglich um die Achse (03) herum erstreckende Magnetisierungsbereiche (04, 05, 06) für eine Magnetisierung aufweist; wobei das Maschinenelement (01) weiterhin magnetisch neutrale Bereiche aufweist, die jeweils axial zwischen den Magnetisierungsbereichen (04, 05, 06) und/oder axial neben den Magnetisierungsbereichen (04, 05, 06) angeordnet sind; wobei die Anordnung weiterhin mindestens einen ersten Magnetfeldsensor (11), einen zweiten Magnetfeldsensor (12) und einen dritten Magnetfeldsensor (13) umfasst, welche jeweils zur einzelnen Messung einer Richtungskomponente eines durch die Magnetisierung sowie durch die Kraft und/oder durch das Moment (Mt) bewirkten Magnetfeldes ausgebildet sind und sich an unterschiedlichen axialen Positionen befinden, **dadurch gekennzeichnet, dass** die durch die Magnetfeldsensoren (11, 12, 13) messbare Richtungskomponente des durch die Magnetisierung sowie durch die Kraft und/oder durch das Moment (Mt) bewirkten Magnetfeldes durch eine axiale Richtungskomponente gebildet ist,
wobei sich der erste Magnetfeldsensor (11) an einer axialen Position des ersten Magnetisierungsbereiches (04) befindet,
sich der zweite Magnetfeldsensor (12) an einer axialen Position des zweiten Magnetisierungsbereiches (05) befindet,
sich der dritte Magnetfeldsensor (13) an einer axialen Position eines der magnetisch neutralen Bereiche befindet,
wobei der erste Magnetisierungsbereich (04) und der zweite Magnetisierungsbereich (05) eine gleiche Polarität aufweisen,
wobei derjenige magnetisch neutrale Bereich, an dessen axialer Position sich der dritte Magnetfeldsensor (13) befindet, axial zwischen dem ersten Magnetisierungsbereich (04) und dem zweiten Magnetisierungsbereich (05) angeordnet ist,
und wobei die Anordnung weiterhin mindestens einen vierten Magnetfeldsensor (14) zur einzelnen Messung einer axialen Richtungskomponente des durch die Magnetisierung sowie durch die Kraft und/oder durch das Moment (Mt) bewirkten Magnetfeldes umfasst.

2. Anordnung nach Anspruch 1, **dadurch gekennzeichnet, dass** die Magnetisierungsbereiche (04, 05, 06) permanent magnetisiert sind, sodass die Magnetisierung durch eine Permanentmagnetisierung gebildet ist.

3. Anordnung nach Anspruch 1 oder 2, **dadurch gekennzeichnet, dass** die Magnetisierungsbereiche (04, 05, 06) ringförmig um die Achse (03) ausgebildet sind.

4. Anordnung nach einem der Ansprüche 1 bis 3, **dadurch gekennzeichnet, dass** die Magnetfeldsensoren (11, 12, 13, 14) einen gleichen Abstand zur Achse (03) aufweisen.

## Claims

1. Apparatus for measuring a force and/or a torque (Mₜ) on a machine element (01) extending in an axis (03); the machine element (01) having at least two magnetization regions (04, 05, 06) extending circumferentially around the axis (03) for a magnetization; the machine element (01) also having magnetically neutral regions, which are each arranged axially between the magnetization regions (04, 05, 06) and/or axially beside the magnetization regions (04, 05, 06); the apparatus further comprising at least a first magnetic field sensor (11), a second magnetic field sensor (12) and a third magnetic field sensor (13), which are each designed for the individual measurement of a directional component of a magnetic field effected by the magnetization and by the force and/or by the torque (Mₜ) and are located at different axial positions, **characterized in that** the directional component of the magnetic field that is effected by the magnetization and by the force and/or by the torque (Mₜ) and can be measured by the magnetic field sensors (11, 12, 13) is formed by an axial directional component,
wherein the first magnetic field sensor (11) is located at an axial position of the first magnetization region (04),
the second magnetic field sensor (12) is located at an axial position of the second magnetization region (05),
the third magnetic field sensor (13) is located at an axial position of one of the magnetically neutral regions,
wherein the first magnetization region (04) and the second magnetization region (05) have the same polarity,
wherein that magnetically neutral region at the axial position of which the third magnetic field sensor (13) is located is arranged axially between the first magnetization region (04) and the second magnetization region (05),
and wherein the apparatus further comprises at least a fourth magnetic field sensor (14) for the individual measurement of an axial directional component of the magnetic field effected by the magnetization and by the force and/or by the torque (Mₜ).

2. Apparatus according to claim 1, **characterized in that** the magnetization regions (04, 05, 06) are permanently magnetized, so that the magnetization is formed by a permanent magnetization.

3. Apparatus according to claim 1 or 2, **characterized in that** the magnetization regions (04, 05, 06) are formed annularly around the axis (03).

4. Apparatus according to any one of claims 1 to 3, **characterized in that** the magnetic field sensors (11, 12, 13, 14) are at the same distance from the axis (03).

## Revendications

1. Arrangement pour mesurer une force et/ou un moment (Mt) au niveau d'un élément de machine (01) qui s'étend dans un axe (03) ; l'élément de machine (01) possédant au moins deux zones de magnétisation (04, 05, 06) qui s'étendent de manière circonférentielle autour de l'axe (03) pour une magnétisation ; l'élément de machine (01) possédant en outre des zones magnétiquement neutres qui sont respectivement disposées dans le sens axial entre les zones de magnétisation (04, 05, 06) et/ou dans le sens axial à côté des zones de magnétisation (04, 05, 06) ; l'arrangement comportant en outre au moins un premier capteur de champ magnétique (11), un deuxième capteur de champ magnétique (12) et un troisième capteur de champ magnétique (13), lesquels sont respectivement configurés pour une mesure individuelle d'une composante d'orientation d'un champ magnétique produit par la magnétisation ainsi que par la force et/ou le moment (Mₜ) et se trouvent à des positions axiales différentes, **caractérisé en ce que** la composante d'orientation mesurable par les capteurs de champ magnétique (11, 12, 13) du champ magnétique produit par la magnétisation ainsi que par la force et/ou le moment (Mₜ)est formée par une composante d'orientation axiale,
le premier capteur de champ magnétique (11) se trouvant à une position axiale de la première zone de magnétisation (04),
le deuxième capteur de champ magnétique (12) se trouvant à une position axiale de la deuxième zone de magnétisation (05),
le troisième capteur de champ magnétique (13) se trouvant à une position axiale de l'une des zones magnétiquement neutres,
la première zone de magnétisation (04) et la deuxième zone de magnétisation (05) possédant une polarité identique,
la zone magnétiquement neutre correspondante à la position axiale de laquelle se trouve le troisième capteur de champ magnétique (13) étant disposée axialement entre la première zone de magnétisation (04) et la deuxième zone de magnétisation (05),
et l'arrangement comprenant en outre au moins un quatrième capteur de champ magnétique (14) destiné à la mesure individuelle d'une composante d'orientation axiale du champ magnétique produit par la magnétisation ainsi que par la force et/ou par le moment (Mt).

2. Arrangement selon la revendication 1, **caractérisé en ce que** les zones de magnétisation (04, 05, 06) sont magnétisées de manière permanente, de sorte que la magnétisation est formée par une magnétisation permanente.

3. Arrangement selon la revendication 1 ou 2, **caractérisé en ce que** les zones de magnétisation (04, 05, 06) sont configurées en forme d'anneau autour de l'axe (03).

4. Arrangement selon l'une quelconque des revendications 1 à 3, **caractérisé en ce que** les capteurs de champ magnétique (11, 12, 13, 14) possèdent un écart identique par rapport à l'axe (03).
